# EUROPÄISCHE PATENTSCHRIFT

(11) **EP 1 620 641 B1**
(45) Veröffentlichungstag und Bekanntmachung des Hinweises auf die Patenterteilung: **18.02.2009**
(21) Anmeldenummer: 04741451.1
(22) Anmeldetag: 06.04.2004
(51) Int. Cl.: F02D 41/14, F02D 41/02

(54) **VERFAHREN ZUM BETREIBEN EINER BRENNKRAFTMASCHINE INSBESONDERE EINES KRAFTFAHRZEUGS**
METHOD FOR OPERATING AN INTERNAL COMBUSTION ENGINE, PARTICULARLY OF A MOTOR VEHICLE
PROCEDE POUR FAIRE FONCTIONNER UN MOTEUR A COMBUSTION INTERNE EQUIPANT NOTAMMENT UN VEHICULE AUTOMOBILE

(30) Priorität: 29.04.2003 DE 10319224
(43) Veröffentlichungstag der Anmeldung: 01.02.2006
(73) Patentinhaber: ROBERT BOSCH GMBH, 70442 Stuttgart (DE)
(72) Erfinder: PFAEFFLE, Andreas, 71543 Wuestenrot (DE); KLENK, Wolfgang, 74369 Loechgau (DE); SCHERER, Stefan, 70329 Stuttgart (DE); NEUBERTH, Simone, 70327 Stuttgart (DE); SCHWADERER, Albrecht, 74199 Untergruppenbach (DE)
(86) Internationale Anmeldenummer: PCT/EP2004/050451
(87) Internationale Veröffentlichungsnummer: WO 2004/097193

(56) Entgegenhaltungen:
- DE-A- 10 038 461
- DE-A- 19 926 305
- US-A1- 2002 144 501

## Beschreibung

### Stand der Technik

Die Erfindung geht aus von einem Verfahren zum Betreiben einer Brennkraftmaschine insbesondere eines Kraftfahrzeugs, bei dem ein mageres Luft/Kraftstoff-Gemisch in einem Brennraum verbrannt wird, bei dem im Abgas enthaltene Stickoxide in einem Speicherkatalysator gespeichert werden, bei dem ein Einspeicherwirkungsgrad ermittelt wird, mit dem der Speicherkatalysator die im Abgas enthaltenen Stickoxide einspeichert, und bei dem der Einspeicherwirkungsgrad in Abhängigkeit von einer aktuellen Raumgeschwindigkeit der Abgase in dem Speicherkatalysator ermittelt wird. Die Erfindung betrifft ebenfalls ein Computerprogramm, ein Steuergerät und eine Brennkraftmaschine der entsprechenden Art.

Ein derartiges Verfahren ist aus der DE 199 26 305 C2 bekannt. Dort wird eine Brennkraftmaschine mit einem mageren Kraftstoff/Luft-Gemisch betrieben, wodurch Stickoxide in einem Speicherkatalysator zwischengespeichert werden. In einer Regenerationsphase wird die Brennkraftmaschine mit einem fetten Kraftstoff/Luft-Gemisch betrieben, wodurch die gespeicherten Stickoxide katalytisch umgesetzt werden. umgesetzt werden.

Während der Einspeicherung von Stickoxiden wird ein Einspeicherwirkungsgrad berechnet, mit dem der Speicherkatalysator im Abgas der Brennkraftmaschine enthaltene Stickoxide einspeichert. Dieser Einspeicherwirkungsgrad ist unter anderem abhängig von einem Luftmassenstrom, der jedoch nur einen Ersatz darstellt für die Raumgeschwindigkeit des Abgases in dem Speicherkatalysator. In Spalte 3, Zeilen 47 bis 49 der DE 199 26 305 C2 wird angenommen, dass dieser Ersatz vorgenommen werden kann, da das Katalysatorvolumen konstant ist.

Es hat sich jedoch herausgestellt, dass die Ermittlung des Einspeicherwirkungsgrads gemäß der DE 199 26 305 C2 ungenau ist.

Aufgabe der Erfindung ist es, ein Verfahren zu schaffen, das einen möglichst optimalen Einspeicherwirkungsgrad ohne größeren Aufwand liefert.

### Lösung und Vorteile der Erfindung

Diese Aufgabe wird bei einem erfahren der eingangs genannten Art erfindungsgemäß durch die Merkmale des kennzeichnenden Teils des Anspruchs 1 gelöst.

Erfindungsgemäß wird also die aktuelle Raumgeschwindigkeit des Abgases in dem Speicherkatalysator berücksichtigt. Es erfolgt also kein Ersatz durch andere Größen. Schon allein dadurch wird die Genauigkeit des erfindungsgemäßen Verfahrens im Vergleich zum Stand der Technik wesentlich verbessert.

Gleichzeitig ist es jedoch nicht erforderlich, dass für sämtliche möglichen aktuellen Raumgeschwindigkeiten entsprechende Wirkungsgrade vorhanden sind. Statt dessen ist dies nur für zwei Raumgeschwindigkeiten erforderlich, auf deren Grundlage dann der Einspeicherwirkungsgrad ermittelt wird. Damit wird gewährleistet, dass das erfindungsgemäße Verfahren nur wenig Aufwand bei trotzdem optimalem Ergebnis mit sich bringt.

Bei der Erfindung werden die beiden Wirkungsgrade in Abhängigkeit von der bereits in dem Speicherkatalysator gespeicherten NOₓ-Masse ermittelt. Damit ist es möglich, bei der Bestimmung des Einspeicherwirkungsgrads zusätzlich zur Temperatur des Speicherkatalysators auch noch die vorgenannte, bereits gespeicherte NOₓ-Masse zu berücksichtigen. Die Genauigkeit des ermittelten Einspeicherwirkungsgrads wird auf diese Weise weiter optimiert.

Weiterhin werden die beiden Wirkungsgrade interpoliert. Damit ist es möglich, auf einfache Weise eine optimale Verknüpfung der beiden Wirkungsgrade zu erreichen.

Bei einer vorteilhaften Ausgestaltung der Erfindung werden die beiden Wirkungsgrade für die beiden Raumgeschwindigkeiten vorab an einem Referenz-Speicherkatalysator desselben Typs gemessen. Die Wirkungsgrade können dann vorteilhafterweise in der Form zweier Kennfelder abgespeichert werden.

Bei einer weiteren vorteilhaften Weiterbildung der Erfindung wird der Einspeicherwirkungsgrad von weiteren Faktoren beeinflusst, beispielsweise von der Speicherung von Schwefeloxiden in dem Speicherkatalysator und/oder von der zeitlichen Alterung des Speicherkatalysators. Damit kann die Genauigkeit des Einspeicherwirkungsgrads weiter erhöht werden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

### Ausführungsbeispiele der Erfindung

Figur 1 zeigt eine schematische Darstellung eines Ausführungsbeispiels einer erfindungsgemäßen Brennkraftmaschine,
Figuren 2a und 2b zeigen zwei schematische dreidimensionale Kennfelder von Betriebsgrößen der Brennkraftmaschine der Figur 1,
Figur 3 zeigt ein schematisches Ablaufdiagramm eines Ausführungsbeispiels eines Verfahrens zum Betreiben der Brennkraftmaschine der Figur 1, und
Figur 4 zeigt ein schematisches Ablaufdiagramm eines Ausführungsbeispiels einer Ergänzung des Verfahrens der Figur 3.

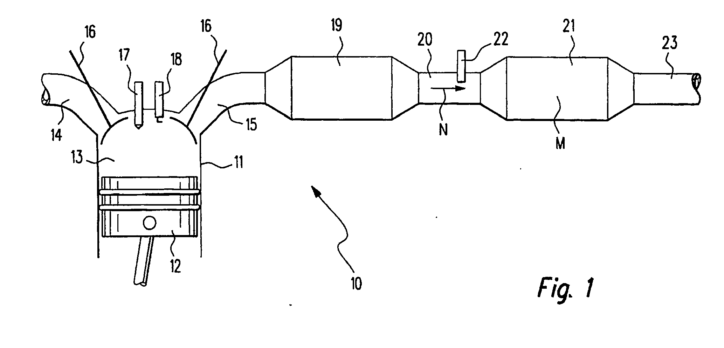

In der Figur 1 ist eine Brennkraftmaschine 10 dargestellt, die insbesondere zur Verwendung in einem Kraftfahrzeug vorgesehen ist. Bei der Brennkraftmaschine 10 handelt es sich um eine Benzin-Brennkraftmaschine mit Direkteinspritzung. Die nachfolgend beschriebene Erfindung kann jedoch in entsprechender Weise auch bei einer DieselBrennkraftmaschine oder bei einer Brennkraftmaschine mit Saugrohreinspritzung angewendet werden.

Die Brennkraftmaschine 10 weist einen Zylinder 11 auf, in dem ein Kolben 12 hin- und herbewegbar ist. Der Zylinder 11 und der Kolben 12 begrenzen einen Brennraum 13. Mit dem Brennraum 13 ist ein Ansaugrohr 14 verbunden, über das dem Brennraum 13 Luft zuführbar ist. Weiterhin ist an den Brennraum 13 ein Abgasrohr 15 angeschlossen, über das Abgas aus dem Brennraum 13 abströmen kann. Zur Steuerung der Luftzufuhr und des Abgasstromes sind Ventile 16 vorgesehen. Weiterhin sind dem Brennraum 13 ein Einspritzventil 17 und eine Zündkerze 18 zugeordnet. Über das Einspritzventil 17 kann Kraftstoff in den Brennraum 13 eingespritzt werden und mit Hilfe der Zündkerze 18 kann der eingespritzte Kraftstoff in dem Brennraum 13 entzündet und damit verbrannt werden.

An das Abgasrohr 15 ist ein Dreiwegekatalysator 19 angeschlossen, der dazu vorgesehen ist, die Schadstoffkomponenten HC, CO und NOₓ in die Komponenten H₂O, CO₂ und N₂ umzuwandeln. Bei einer DieselBrennkraftmaschine ist der Dreiwegekatalysator 19 nicht zwingend erforderlich. Über ein Rohr 20 ist der Dreiwegekatalysator mit einem Speicherkatalysator 21 verbunden. In dem Rohr 20 kann ein Temperatursensor 22 vorgesehen sein, der die Temperatur des in den Speicherkatalysator 21 einströmenden Abgases ermittelt. Der Temperatursensor 22 kann alternativ auch dem Speicherkatalysator 21 oder einer sonstigen Stelle des Abgasstrangs zugeordnet sein, um die Temperatur des Abgases direkt und/oder mit Hilfe einer Modellierung zu messen bzw. zu ermitteln. An den Speicherkatalysator 21 ist ein weiteres Rohr 23 angeschlossen.

Wird die Brennkraftmaschine 10 mit einem stöchiometrischen Luft/Kraftstoff-Gemisch, also mit Lambda = 1 betrieben, so werden die dabei entstehenden Schadstoffkomponenten von dem Dreiwegekatalysator 19 konvertiert. Zur Einsparung von Kraftstoff wird die Brennkraftmaschine 10 jedoch auch mit einem mageren Luft/Kraftstoff-Gemisch, also mit Lambda > 1 betrieben. Dies hat zur Folge, dass die im Abgas enthaltenen Stickoxide NOₓ aufgrund des Luftüberschusses in dem Dreiwegekatalysator 19 nicht mehr reduziert werden können.

Zu diesem Zweck ist der Speicherkatalysator 21 vorgesehen, der dazu geeignet ist, die Stickoxide NOₓ zwischenzuspeichern. Die Speicherkapazität des Speicherkatalysators 21 ist begrenzt. So nimmt die Speicherfähigkeit mit zunehmendem Füllgrad des Speicherkatalysators 21 ab. Weiterhin hängt die Grenze der Speicherfähigkeit von Betriebsgrößen der Brennkraftmaschine 10 ab.

Der Speicherkatalysator 21 muss immer wieder entladen bzw. regeneriert werden. Hierzu wird die Brennkraftmaschine 10 kurzzeitig mit einem fetten Luft/Kraftstoff-Gemisch, also mit Lambda < 1 betrieben. Die in dem Speicherkatalysator 21 gespeicherten Stickoxide NOₓ werden dadurch in die Komponenten N₂ und CO₂ konvertiert. Nach einer derartigen Regeneration des Speicherkatalysators 21 kann dieser wieder erneut Stickoxide NOₓ zwischenspeichern.

Der Zeitpunkt für die Durchführung einer Regeneration des Speicherkatalysators 21 kann beispielsweise mit Hilfe eines dem Speicherkatalysator 21 nachgeordneten NOₓ-Sensors bestimmt werden. Häufig ist es jedoch auch erforderlich, ohne den vorgenannten NOₓ-Sensor die Regeneration des Speicherkatalysators 21 zu steuern. Hierzu kann das nachfolgend beschriebene, erfindungsgemäße Verfahren angewendet werden.

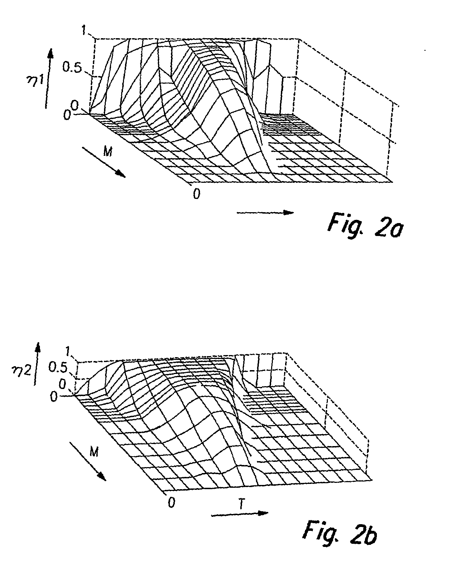

In den Figuren 2a und 2b sind zwei Kennfelder mit Zustandsgrößen des Speicherkatalysators 21 dargestellt, die über jeweils drei Achsen aufgespannt sind. In beiden Kennfeldern handelt es sich dabei um eine Temperatur T des Speicherkatalysators 21, um eine in dem Speicherkatalysator 21 bereits eingespeicherte NOₓ-Masse M und um einen Wirkungsgrad η1 bzw. η2. Das Kennfeld der Figur 2a bezieht sich auf eine erste Raumgeschwindigkeit R1 des Abgases in dem Speicherkatalysator 21 und das Kennfeld der Figur 2b bezieht sich auf eine zweite derartige Raumgeschwindigkeit R2. Aufgrund der unterschiedlichen Raumgeschwindigkeiten R1, R2 ergeben sich auch unterschiedliche Kennfelder in den Figuren 2a und 2b und damit insbesondere unterschiedliche Wirkungsgrade η1 und η2.

Beispielsweise aus dem Kennfeld der Figur 2a ist ersichtlich, dass der Wirkungsgrad η1 wesentlich von der Temperatur T des Speicherkatalysators 21 und der bereits eingespeicherten NOₓ-Masse M abhängig ist. So wird der Wirkungsgrad η1 im allgemeinen umso größer, je kleiner die bereits in dem Speicherkatalysator 21 eingespeicherte Noₓ-Masse M ist. Weiterhin wird der Wirkungsgrad η1 im allgemeinen kleiner, wenn die Temperatur T des Speicherkatalysators 21 eher kleinere oder eher größere Werte annimmt.

Die Raumgeschwindigkeit R1 des Abgases in dem Speicherkatalysator 21 ist in dem Kennfeld der Figur 2a größer als die Raumgeschwindigkeit R2 bei dem Kennfeld der Figur 2b. Insbesondere stellt die Raumgeschwindigkeit R1 in dem Kennfeld der Figur 2a einen Maximalwert und die Raumgeschwindigkeit R2 in dem Kennfeld der Figur 2b einen Minimalwert dar. Aus einem Vergleich der beiden Kennfelder der Figuren 2a und 2b ist ersichtlich, dass - bei ansonsten gleichen Bedingungen - der Wirkungsgrad η1 des Kennfelds der Figur 2a im allgemeinen größer ist als der Wirkungsgrad η2 des Kennfelds der Figur 2b.

Die beiden Kennfelder der Figuren 2a und 2b werden vorab an einem Referenz-Speicherkatalysator gemessen und die sich ergebenden Werte werden auf irgend eine Art und Weise abgespeichert. Der in der Figur 1 verwendete Speicherkatalysator 21 hat denselben Typ wie der vermessene Referenz-Speicherkatalysator.

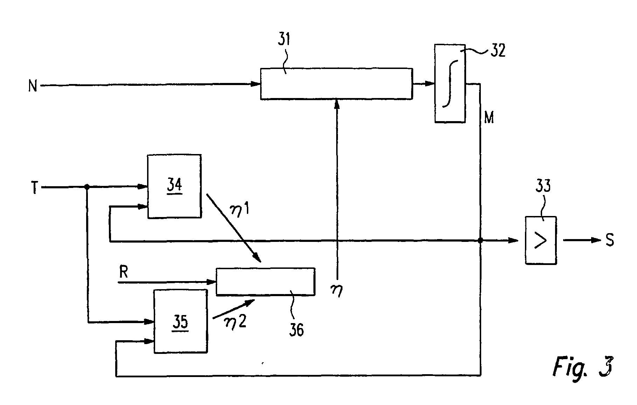

In der Figur 3 ist ein Verfahren zum Betreiben der Brennkraftmaschine 10 dargestellt. Dieses Verfahren wird von einem Steuergerät ausgeführt, das Eingangssignale von Sensoren, z.B. dem Temperatursensor 22 erhält, und das Ausgangssignale für Aktoren, z.B. für das Einspritzventil 17 oder die Zündkerze 18 erzeugt, mit denen die Brennkraftmaschine 10 steuerbar ist. Das Steuergerät ist derart hergerichtet, dass es das nachfolgend beschriebene Verfahren ausführen kann. Hierzu kann das Steuergerät in analoger Schaltungstechnik und/oder als digitaler Prozessor mit Speicher ausgebildet sein. In letzterem Fall ist ein Computerprogramm vorhanden, das derart programmiert ist, dass das beschriebene Verfahren mit Hilfe des Computerprogramms ausgeführt wird. Die erwähnten Kennfelder der Figuren 2a und 2b können in diesem Fall in dem vorgenannten Speicher abgespeichert sein.

Gemäß der Figur 3 wird eine NOₓ-Rohmasse N einem Block 31 zugeführt. Bei der NOₓ-Rohmasse N handelt es sich um diejenige Masse an Stickoxiden NOₓ, die von der Brennkraftmaschine 10 ausgestoßen und in dem Abgasstrom zu dem Speicherkatalysator 21 vorhanden ist. In der Figur 1 ist diese NOₓ-Rohmasse N im Zusammenhang mit dem Rohr 20 angedeutet. Die NOₓ-Rohmasse N kann mit Hilfe von Sensoren und/oder Modellberechnungen aus Betriebsgrößen der Brennkraftmaschine 10 ermittelt werden.

Entsprechend der Figur 3 wird die NOₓ-Rohmasse N mit einem Wirkungsgrad η verknüpft. Dies wird noch näher erläutert werden. Die auf diese Weise erhaltene NOₓ-Masse wird einem Block 32 zugeführt, der einen Integrator darstellt. Mit Hilfe dieses Integrators 32 wird die bereits in dem Speicherkatalysator 21 eingespeicherte NOₓ-Masse M ermittelt. Dabei wird davon ausgegangen, dass nach einer vollständigen Regeneration des Speicherkatalysators 21 der Integrator 32 auf Null zurückgesetzt wird, um dann eine neue Aufintegration der mit dem Wirkungsgrad η gewichteten NOₓ-Rohmasse N vorzunehmen. Die in dem Speicherkatalysator 21 gespeicherte NOₓ-Masse M ist auch in der Figur 1 angegeben.

In einem nachfolgenden Block 33 wird die NOₓ-Masse M mit einem vorgegebenen Schwellwert verglichen. Überschreitet die NOₓ-Masse M diesen Schwellwert, so wird ein Signal S erzeugt, das einer nicht-dargestellten Regenerationssteuerung zugeführt wird, die diese Information im Rahmen eines Entscheidungsprozeßes hinsichtlich des Einleitens einer Regeneration des Speicherkatalysators 21 verwendet.

Weiterhin wird die in dem Speicherkatalysator 21 bereits zwischengespeicherte NOₓ-Masse M den beiden Kennfeldern der Figuren 2a und 2b zugeführt. Das Kennfeld der Figur 2a ist in der Figur 3 als Block 34 und das Kennfeld der Figur 2b als Block 35 dargestellt.

Weiterhin ist den beiden Kennfeldern 34, 35 die Temperatur T des Speicherkatalysators 21 zugeführt. Die Temperatur T kann mit Hilfe eines Modells ermittelt werden, wenn der Temperatursensor 22 - wie in der Figur 1 gezeigt - nur die Temperatur des Abgasstroms zu dem Speicherkatalysator 21 misst. Wenn der Temperatursensor 22 direkt dem Speicherkatalysator 21 zugeordnet ist, dann kann die Temperatur T unmittelbar weiterverwendet werden.

Aus den beiden Kennfeldern 34, 35 wird nunmehr in Abhängigkeit von der NOₓ-Masse M und der Temperatur T jeweils ein Wirkungsgrad η1 und η2 ausgelesen. Die beiden Wirkungsgrade η1, η2 werden einer Interpolation zugeführt, die in der Figur 3 als Block 36 dargestellt ist. Dieser Interpolation ist weiterhin die tatsächliche Raumgeschwindigkeit R zugeführt, die aktuell in dem Speicherkatalysator 21 vorhanden ist. Diese Raumgeschwindigkeit R kann beispielsweise aus dem Abgasvolumenstrom ermittelt werden, der seinerseits mit Hilfe von Sensoren gemessen und/oder mit Hilfe von Modellen und/oder Kennfeldern aus anderen Betriebsgrößen der Brennkraftmaschine 10 berechnet werden kann.

Die beiden Wirkungsgrade η1, η2 werden daraufhin in Abhängigkeit von der Raumgeschwindigkeit R von der Interpolation 36 zu einem Einspeicherwirkungsgrad η verknüpft. Zu diesem Zweck können bekannte Interpolationsverfahren verwendet werden. Im einfachsten Fall kann aus den bekannten Raumgeschwindigkeiten R1, R2, die den beiden Kennfeldern 34, 35 zugrunde liegen, sowie aus der aktuellen Raumgeschwindigkeit R ein Faktor ermittelt werden, mit dem die beiden Wirkungsgrade η1, η2 in die Berechnung des Einspeicherwirkungsgrads η eingehen.

Durch die Interpolation 36 wird erreicht, dass weder die Raumgeschwindigkeit R1, die dem Kennfeld 34 zugrunde liegt, noch die Raumgeschwindigkeit R2, die dem Kennfeld 35 zugrunde liegt, jeweils allein ausschlaggebend ist, sondern dass die tatsächliche Raumgeschwindigkeit R in dem Speicherkatalysator 21 berücksichtigt wird. Damit ist der Einspeicherwirkungsgrad η insgesamt von der tatsächlichen Raumgeschwindigkeit R des Speicherkatalysators 21, sowie - über die beiden Kennfelder 34, 35 - von der Temperatur T des Speicherkatalysators 21 und der in demselben bereits abgespeicherten NOₓ-Masse M abhängig.

Wie bereits erwähnt wurde, wird der Einspeicherwirkungsgrad η in dem Block 31 mit der NOₓ-Rohmasse N verknüpft. Im einfachsten Fall kann dies dadurch erfolgen, dass die NOₓ-Rohmasse N mit dem Einspeicherwirkungsgrad η multipliziert wird. In diesem Fall handelt es sich bei dem Block 31 um einen Multiplizierer. Es können aber auch andere Verknüpfungen vorgesehen sein und mittels des Blocks 31 ausgeführt werden.

Durch die Verknüpfung der NOₓ-Rohmasse N mit dem Einspeicherwirkungsgrad η wird erreicht, dass nicht die gesamte, dem Speicherkatalysator 21 zuströmende NOₓ-Rohmasse N so betrachtet wird, als ob sie vollständig in dem Speicherkatalysator 21 abgespeichert werden würde, sondern dass nur derjenige Anteil der NOₓ-Rohmasse N betrachtet wird, den der Speicherkatalysator 21 aufgrund der aktuellen Betriebsbedingungen momentan überhaupt einspeichern kann.

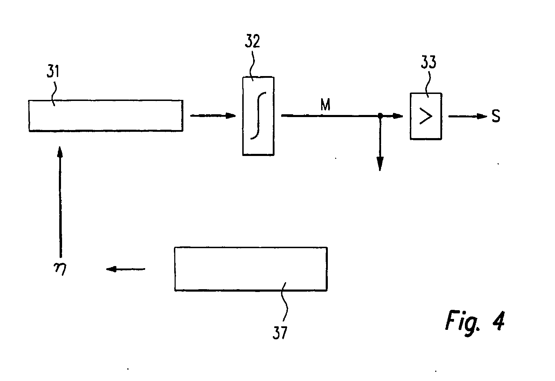

In der Figur 4 ist eine Ergänzung zu dem Verfahren dargestellt, das anhand der Figuren 2a, 2b und 3 erläutert worden ist. Übereinstimmende Merkmale sind mit übereinstimmenden Bezugszeichen gekennzeichnet.

Bei einem Betrieb der Brennkraftmaschine 10 mit einem mageren Luft/Kraftstoff-Gemisch entstehen nicht nur Stickoxide NOₓ, sondern auch Schwefeloxide, insbesondere Schwefeldioxid SO₂, Der Speicherkatalysator 21 speichert auch dieses Schwefeldioxid SO₂ ab, so dass es auch insoweit zu einer Beladung des Speicherkatalysators 21 kommt, die mit der Beladung desselben mit Stickoxiden NOₓ vergleichbar ist. Die Beladung mit Schwefeldioxid SO₂ führt dazu, dass die Speicherfähigkeit und damit der Einspeicherwirkungsgrad η für die Beladung des Speicherkatalysators 21 mit Stickoxiden NOₓ vermindert wird. Ein Unterschied besteht darin, dass die Beladung mit Schwefeldioxid SO₂ wesentlich langsamer erfolgt als die Beladung mit Stickoxiden NOₓ. Weiterhin ist eine Regeneration des Speicherkatalysators 21 unter normalen Betriebsbedingungen nicht möglich, sondern erfordert eine erhöhte Temperatur des Speicherkatalysators 21.

In der Figur 4 ist ein Block 37 vorhanden, der zur Berücksichtigung der Beladung des Speicherkatalysators 21 mit Schwefeldioxid SO₂ vorgesehen ist. Zu diesem Zweck wird von dem Block 37 mitgezählt, wie häufig eine Regeneration des Speicherkatalysators 21 von der Regenerationssteuerung aufgrund des Signals S durchgeführt wird. Mit Hilfe von Messungen, die vorab an einem Referenz-Speicherkatalysator gleichen Typs durchgeführt werden, ist dem Block 37 bekannt, wie viel Schwefeldioxid SO₂ während eines Beladungsvorgangs des Speicherkatalysators mit Stickoxiden NOₓ in demselben eingespeichert werden. Damit kann der Block 37 ermitteln, wie viel Schwefeldioxid SO₂ aktuell in dem Speicherkatalysator 21 eingespeichert ist. Daraus kann der Block 37 - gegebenenfalls wiederum mit Hilfe von vorab durchgeführten Messungen an einem Referenz-Speicherkatalysator - einen Faktor ableiten, mit dem der Einspeicherwirkungsgrad beeinflusst werden muss, damit die aufgrund des eingespeicherten Schwefeldioxids SO₂ verminderte Speicherfähigkeit des Speicherkatalysators 21 berücksichtigt wird. Dieser Faktor wird dann von dem Block 37 erzeugt, um danach entsprechend den Einspeicherwirkungsgrad η zu verändern.

Ebenfalls ist es möglich, dass in Abhängigkeit von der Gesamtmenge an verbranntem Kraftstoff auf der Grundlage des bekannten Gehalts an Schwefeldioxid SO₂ im Kraftstoff die Beladung des Speicherkatalysators 21 mit Schwefeldioxid SO₂ ermittelt wird. Dabei kann davon ausgegangen werden, dass etwa das gesamte Schwefeldioxid SO₂ in dem Speicherkatalysator 21 eingespeichert wird. Bei wechselndem Kraftstoff und damit wechselndem Gehalt an Schwefeldioxid SO₂ können Plausibilitätsbetrachtungen vorgenommen werden. Die Beladung des Speicherkatalysators 21 muss dabei ausgehend von der zuletzt durchgeführten Regeneration desselben hinsichtlich des Schwefeldioxids SO₂ erfolgen. Auf dieser Grundlage kann dann wieder der bereits erwähnte Faktor abgeleitet werden, der danach den Einspeicherwirkungsgrad η verändert.

Ganz allgemein kann damit aus der auf beliebige Weise bestimmten und gegebenenfalls plausibilisierten Menge an bereits eingespeichertem Schwefeldioxid SO₂ auf den genannten Faktor geschlossen werden, der letztlich dann eine Verschlechterung des Einspeicherwirkungsgrads des Speicherkatalysators 21 darstellt.

Erreicht der von dem Block 37 erzeugte Faktor einen vorgegebenen Schwellwert, so kann eine Regeneration des Speicherkatalysators 21 hinsichtlich des Schwefeldioxids SO₂ erfolgen. Hierzu wird der Speicherkatalysator 21 beispielsweise bei einem fetten Luft/Kraftstoff-Gemisch, also mit Lambda < 1, auf eine erhöhte Temperatur erhitzt. Danach kann der genannte Faktor wieder auf einen vorab bestimmten Ausgangswert zurückgesetzt werden.

In entsprechender Weise, wie von dem Block 37 die Speicherung von Schwefeldioxid SO₂ in dem Speicherkatalysator 21 berücksichtigt werden kann, ist es ebenfalls möglich, dass der Block 37 zur Berücksichtigung weiterer betriebsbedingter Veränderungen des Speicherkatalysators 21 herangezogen wird. So kann beispielsweise ein weiterer Faktor vorgesehen sein, der die zeitliche Alterung und/oder z.B. temperaturbedingte Schädigung des Speicherkatalysators 21 berücksichtigt, und der in entsprechender Weise auf den Einspeicherwirkungsgrad η einwirkt.

## Patentansprüche

1. Verfahren zum Betreiben einer Brennkraftmaschine (10) insbesondere eines Kraftfahrzeugs, bei dem ein mageres Luft/Kraftstoff-Gemisch in einem Brennraum verbrannt wird, bei dem im Abgas enthaltene Stickoxide in einem Speicherkatalysator (21) gespeichert werden, bei dem ein Einspeicherwirkungsgrad (η) ermittelt wird, mit dem der Speicherkatalysator (21) die im Abgas enthaltenen Stickoxide einspeichert, und bei dem der Einspeicherwirkungsgrad (η) in Abhängigkeit von einer aktuellen Raumgeschwindigkeit (R) der Abgase in dem Speicherkatalysator (21) ermittelt wird, **dadurch gekennzeichnet, dass** die aktuelle Raumgeschwindigkeit (R) aus dem Abgasvolumenstrom in dem Speicherkatalysator (21) ermittelt wird, dass zwei Wirkungsgrade (η1, η2) zumindest in Abhängigkeit von der Temperatur (T) des Speicherkatalysators (21) und einer Raumgeschwindigkeit (R1, R2) ermittelt werden, dass einer der beiden Wirkungsgrade (η1) für eine große Raumgeschwindigkeit (R1) und der andere Wirkungsgrad (η2) für eine kleine Raumgeschwindigkeit (R2) ermittelt wird, dass der Einspeicherwirkungsgrad (η) in Abhängigkeit von der aktuellen Raumgeschwindigkeit (R) aus den beiden Wirkungsgraden (η1, η2) ermittelt wird, dass die beiden Wirkungsgrade (η1, η2) in Abhängigkeit von der bereits in dem Speicherkatalysator (21) gespeicherten NOₓ-Masse (M) ermittelt werden, und dass die beiden Wirkungsgrade (η1, η2) interpoliert werden.

2. Verfahren nach Anspruch 1, **dadurch gekennzeichnet, dass** die beiden Wirkungsgrade (η1, η2) für die beiden Raumgeschwindigkeiten (R1, R2) vorab an einem Referenz-Speicherkatalysator desselben Typs gemessen werden.

3. Verfahren nach Anspruch 2, **dadurch gekennzeichnet, dass** die gemessenen beiden Wirkungsgrade (η1, η2) in der Form zweier Kennfelder (34, 35) abgespeichert werden.

4. Verfahren nach einem der Ansprüche 1 bis 3, **dadurch gekennzeichnet**, das der Einspeicherwirkungsgrad (η) von weiteren Faktoren beeinflusst wird, beispielsweise von der Speicherung von Schwefeloxiden in dem Speicherkatalysator (21) und/oder von der zeitlichen Alterung des Speicherkatalysators (21).

5. Computerprogramm, das zur Anwendung des Verfahrens nach einem der Ansprüche 1 bis 4 programmiert ist.

6. Steuergerät, das zur Anwendung des Verfahrens nach einem der Ansprüche 1 bis 4 hergerichtet ist.

7. Brennkraftmaschine (10) mit einem Steuergerät, das zur Anwendung des Verfahrens nach einem der Ansprüche 1 bis 4 hergerichtet ist.

## Claims

1. Method for operating an internal combustion engine (10), in particular of a motor vehicle, in which method a lean air/fuel mixture is burned in a combustion chamber, in which method nitrogen oxides which are contained in the exhaust gas are stored in a storage catalytic converter (21), in which method a storage efficiency (η) with which the storage catalytic converter (21) stores the nitrogen oxides contained in the exhaust gas is determined, and in which method the storage efficiency (η) is determined as a function of a present spatial velocity (R) of the exhaust gases in the storage catalytic converter (21), **characterized in that** the present spatial velocity (R) is determined from the exhaust-gas volume flow in the storage catalytic converter (21), **in that** two efficiencies (η1, η2) are determined at least as a function of the temperature (T) of the storage catalytic converter (21) and of a spatial velocity (R1, R2), **in that** one of the two efficiencies (η1) is determined for a high spatial velocity (R1) and the other efficiency (η2) is determined for a low spatial velocity (R2), **in that** the storage efficiency (η) is determined as a function of the present spatial velocity (R) from the two efficiencies (η1, η2), **in that** the two efficiencies (η1, η2) are determined as a function of the NOₓ mass (M) already stored in the storage catalytic converter (21), and **in that** the two efficiencies (η1, η2) are interpolated.

2. Method according to Claim 1, **characterized in that** the two efficiencies (η1, η2) for the two spatial velocities (R1, R2) are measured in advance in a reference storage catalytic converter of the same type.

3. Method according to Claim 2, **characterized in that** the measured two efficiencies (η1, η2) are stored in the form of two characteristic maps (34, 35).

4. Method according to one of Claims 1 to 3, **characterized in that** the storage efficiency (η) is influenced by further factors, for example by the storage of sulphur oxides in the storage catalytic converter (21) and/or by the ageing of the storage catalytic converter (21) over time.

5. Computer program which is programmed to implement the method according to one of Claims 1 to 4.

6. Control unit which is set up to implement the method according to one of Claims 1 to 4.

7. Internal combustion engine (10) having a control unit which is set up to implement the method according to one of Claims 1 to 4.

## Revendications

1. Procédé pour faire fonctionner un moteur à combustion interne (10), en particulier d'un véhicule automobile, dans lequel un mélange air/carburant pauvre est brûlé dans une chambre de combustion, dans laquelle des oxydes d'azote contenus dans le gaz d'échappement sont stockés dans un catalyseur à accumulation (21), dans lequel on détermine un rendement d'accumulation (η) avec lequel le catalyseur à accumulation (21) accumule les oxydes d'azote contenus dans le gaz d'échappement, et dans lequel on détermine le rendement d'accumulation (η) en fonction d'une vitesse spatiale actuelle (R) des gaz d'échappement dans le catalyseur à accumulation (21), **caractérisé en ce que** la vitesse spatiale actuelle (R) est déterminée à partir du débit volumique de gaz d'échappement dans le catalyseur à accumulation (21), **en ce que** deux rendements (η1, η2) sont déterminés au moins en fonction de la température (T) du catalyseur à accumulation (21) et d'une vitesse spatiale (R1, R2), **en ce que** l'un des deux rendements (η1) est déterminé pour une grande vitesse spatiale (R1) et l'autre rendement (η2) est déterminé pour une petite vitesse spatiale (R2), **en ce que** le rendement d'accumulation (η) est déterminé en fonction de la vitesse spatiale actuelle (R) à partir des deux rendements (η1, η2), **en ce que** les deux rendements (η1, η2) sont déterminés en fonction de la masse de NOₓ (M) déjà accumulée dans le catalyseur à accumulation (21), et **en ce que** les deux rendements (η1, η2) sont interpolés.

2. Procédé selon la revendication 1, **caractérisé en ce que** les deux rendements (η1, η2) sont mesurés pour les deux vitesses spatiales (R1, R2) préalablement sur un catalyseur à accumulation de référence du même type.

3. Procédé selon la revendication 2, **caractérisé en ce que** les deux rendements mesurés (η1, η2) sont mémorisés sous la forme de deux champs caractéristiques (34, 35).

4. Procédé selon l'une quelconque des revendications 1 à 3, **caractérisé en ce que** le rendement d'accumulation (η) est influencé par d'autres facteurs, par exemple par l'accumulation d'oxydes de soufre dans le catalyseur à accumulation (21) et/ou par le vieillissement dans le temps du catalyseur à accumulation (21).

5. Programme informatique, programmé pour l'application du procédé selon l'une quelconque des revendications 1 à 4.

6. Appareil de commande prévu pour l'application du procédé selon l'une quelconque des revendications 1 à 4.

7. Moteur à combustion interne (10) comprenant un appareil de commande qui est prévu pour l'application du procédé selon l'une quelconque des revendications 1 à 4.
